# EUROPÄISCHE PATENTSCHRIFT

(11) **EP 3 026 771 B1**
(45) Veröffentlichungstag und Bekanntmachung des Hinweises auf die Patenterteilung: **24.11.2021**
(21) Anmeldenummer: 14195187.1
(22) Anmeldetag: 27.11.2014
(51) Int. Cl.: H02H 3/05, H02H 7/26, H02H 3/00, H02J 13/00, H02H 1/00, H02J 3/00

(54) **Elektrische Energieverteilanlage**
Electrical energy distributor
Installation de distribution d'énergie électrique

(43) Veröffentlichungstag der Anmeldung: 01.06.2016
(73) Patentinhaber: Siemens Aktiengesellschaft, 80333 München (DE)
(72) Erfinder: Englert, Heiko, 90559 Burgthann (DE); Heine, Holger, 90459 Nürnberg (DE)

(56) Entgegenhaltungen:
- WO-A1-2013/104423
- WO-A2-2011/098873
- US-A1- 2012 063 039
- None

## Beschreibung

Die Erfindung bezieht sich auf elektrische Energieverteilanlagen, Ein- und Ausgabeeinheiten für Energieverteilanlagen, eine Zentraleinheit zur Ausübung einer zentralen Netzschutzfunktion in einer Energieverteilanlage sowie ein Verfahren zum Betreiben einer Energieverteilanlage.

Die US-Offenlegungsschrift US 2008/0106838 A1 offenbart eine elektrische Energieverteilanlage mit einer Vielzahl an Anlagenfeldern. Jedes Anlagenfeld ist jeweils mit einer Ein- und Ausgabeeinheit ausgestattet. Die Ein- und Ausgabeeinheiten stehen mit einer Zentraleinheit in einer Datenverbindung. Die Zentraleinheit gewährleistet eine Schutzfunktion für die Anlagenfelder der Energieverteilanlage.

Elektrische Energieverteilanlagen mit zumindest zwei Anlagenfeldern und mit einer die Anlagenfelder überwachenden Zentraleinheit, die für die Anlagenfelder eine Netzschutzfunktion ausübt, wobei Ein- und Ausgabeeinheiten der Anlegefelder mit Netzschutzfunktionseinrichtungen ausgestattet und im Falle einer die Datenverbindung zu oder die Zentraleinheit selbst betreffenden Betriebsstörung die Netzschutzfunktion in ihrem jeweiligen Anlagenfeld mittels dieser eigenen Netzschutzfunktionseinrichtung jeweils selbst ausüben können, sind aus WO 2011/098873 und US 2012/063039 bekannt.

Der Erfindung liegt die Aufgabe zugrunde, eine elektrische Energieverteilanlage anzugeben, die ein besonders hohes Maß an Betriebssicherheit gewährleistet.

Diese Aufgabe wird erfindungsgemäß durch eine elektrische Energieverteilanlage mit den Merkmalen gemäß Patentanspruch 1 gelöst. Vorteilhafte Ausgestaltungen der erfindungsgemäßen Energieverteilanlage sind in Unteransprüchen angegeben.

Danach ist erfindungsgemäß vorgesehen, dass die Ein- und Ausgabeeinheiten jeweils mit einer eigenen Netzschutzfunktionseinrichtung ausgestattet sind und im Falle einer die Datenverbindung oder die Zentraleinheit betreffenden Betriebsstörung die Netzschutzfunktion in ihrem jeweiligen Anlagenfeld mittels dieser eigenen Netzschutzfunktionseinrichtung jeweils selbst ausüben.

Ein wesentlicher Vorteil der erfindungsgemäßen Energieverteilanlage ist darin zu sehen, dass auch bei Ausfall der Datenverbindung zwischen der Zentraleinheit und den Anlagenfeldern eine anlagenfeldindividuelle Netzschutzfunktion gewährleistet wird, nämlich durch die Ein- und Ausgabeeinheiten, die erfindungsgemäß dazu befähigt sind, autark bzw. unabhängig von der Zentraleinheit eine lokale Netzschutzfunktion für das jeweilige Anlagenfeld gewährleisten zu können.

Mit Blick auf eine zuverlässige Überwachung der Datenverbindung ist erfindungsgemäß vorgesehen, dass die Ein- und Ausgabeeinheiten jeweils mit einer Datenverbindungsüberwachungseinrichtung ausgestattet sind, die das Bestehen der Datenverbindung überwacht und bei Ausfall oder Störung der Datenverbindung oder bei Nichterreichbarkeit der Zentraleinheit die Netzschutzfunktionseinrichtung der jeweiligen Ein- und Ausgabeeinheit aktiviert.

Um eine aufwendige manuelle Parametrierung der Netzschutzfunktion in den einzelnen Anlagenfeldern zu vermeiden, ist erfindungsgemäß vorgesehen, dass die Zentraleinheit derart ausgestaltet ist, dass sie beim Einschalten bzw. bei der Inbetriebnahme der Ein- und Ausgabeeinheiten abgespeicherte Netzschutzfunktionsparameter an die Ein- und Ausgabeeinheiten übermittelt und die Netzschutzfunktionseinrichtungen der Ein- und Ausgabeeinheiten jeweils mit einem Speicher ausgestattet sind, der von der Zentraleinheit erhaltene Netzschutzfunktionsparameter abspeichert, und die Netzschutzfunktionseinrichtungen derart ausgestaltet sind, dass sie im Falle einer Störung oder eines Ausfalls der Datenverbindung die Netzschutzfunktion auf der Basis der abgespeicherten Netzschutzfunktionsparameter ausüben.

Vorzugsweise bleibt die Netzschutzfunktionseinrichtung der Ein- und Ausgabeeinheiten jeweils abgeschaltet, solange die Datenverbindung besteht und die Zentraleinheit erreichbar und betriebsbereit ist.

Darüber hinaus wird es als vorteilhaft angesehen, wenn die Ein- und Ausgabeeinheiten derart ausgestaltet sind, dass die Netzschutzfunktionseinrichtungen der Ein- und Ausgabeeinheiten auch bei Bestehen der Datenverbindung aktivierbar sind, sei es von der Zentraleinheit oder einer anderen Einheit aus über ein über die Datenverbindung übersendetes Steuersignal oder manuell.

Die Zentraleinheit ist vorzugsweise derart ausgestaltet, dass sie die Aktivierung der Netzschutzfunktionseinrichtungen der Ein- und Ausgabeeinheiten über die Datenverbindung auslöst, wenn sie in einen Revisionsbetrieb geschaltet wird.

Die Erfindung bezieht sich darüber hinaus auf eine Ein- und Ausgabeeinheit für ein Anlagenfeld einer Energieverteilanlage, als definiert in Anspruch 5.

Bezüglich einer solchen Ein- und Ausgabeeinheit ist erfindungsgemäß vorgesehen, dass diese mit einer Schnittstelle zum Herstellen einer Datenverbindung mit einer Zentraleinrichtung ausgestattet ist, die Ein- und Ausgabeeinheit geeignet ist, Zustandsinformationen über den Zustand des Anlagenfeldes über die Datenverbindung an die Zentraleinheit zu übermitteln und empfangene Steuerbefehle der Zentraleinheit umzusetzen, und die Ein- und Ausgabeeinheit mit einer eigenen Netzschutzfunktionseinrichtung ausgestattet ist sowie außerdem derart ausgestaltet ist, dass sie im Falle einer die Datenverbindung oder die Zentraleinheit betreffenden Betriebsstörung die Netzschutzfunktion in ihrem jeweiligen Anlagenfeld mittels ihrer Netzschutzfunktionseinrichtung selbst ausübt.

Bezüglich der Vorteile der erfindungsgemäßen Ein- und Ausgabeeinheit sei auf die obigen Ausführungen im Zusammenhang mit der erfindungsgemäßen Energieverteilanlage verwiesen.

Die Erfindung bezieht sich darüber hinaus auf eine Zentraleinheit für eine Energieverteilanlage, als definiert in Anspruch 6.

Bezüglich einer solchen Zentraleinheit ist erfindungsgemäß vorgesehen, dass diese derart ausgestaltet ist, dass sie beim oder nach dem Einschalten abgespeicherte Netzschutzfunktionsparameter an Netzschutzfunktionseinrichtungen untergeordneter Ein- und Ausgabeeinheiten übermittelt.

Bezüglich der Vorteile der erfindungsgemäßen Zentraleinheit sei auf die obigen Ausführungen im Zusammenhang mit der erfindungsgemäßen Energieverteilanlage verwiesen.

Die Erfindung bezieht sich darüber hinaus auf ein Verfahren nach Anspruch 7.

Bezüglich der Vorteile des erfindungsgemäßen Verfahrens gelten die obigen Ausführungen im Zusammenhang mit der erfindungsgemäßen Energieverteilanlage entsprechend.

Als besonders vorteilhaft wird es angesehen, dass erfindungsgemäß die Ein- und Ausgabeeinheiten das Bestehen der Datenverbindung überwachen und bei Ausfall oder Störung der Datenverbindung oder bei Nichterreichbarkeit der Zentraleinheit die Netzschutzfunktionseinrichtung aktivieren.

Auch ist es vorteilhaft, dass erfindungsgemäß die Zentraleinheit beim Einschalten bzw. bei der Inbetriebnahme der Ein- und Ausgabevorrichtungen abgespeicherte Netzschutzfunktionsparameter an die Ein- und Ausgabeeinheiten übermittelt und die Netzschutzfunktionseinrichtungen der Ein- und Ausgabeeinheiten von der Zentraleinheit erhaltene Netzschutzfunktionsparameter abspeichern und im Falle einer Störung oder eines Ausfalls der Datenverbindung die Netzschutzfunktion auf der Basis der abgespeicherten Netzschutzfunktionsparameter ausüben.

Die Erfindung wird nachfolgend anhand von Ausführungsbeispielen näher erläutert; dabei zeigen beispielhaft
- Figur 1: ein Ausführungsbeispiel für eine erfindungsgemäße elektrische Energieverteilanlage, die u. a. eine Zentraleinheit und zwei Ein- und Ausgabeeinheiten umfasst, im störungsfreien Zustand,
- Figur 2: die Energieverteilanlage gemäß Figur 1 im Falle eines Ausfalls einer Datenverbindung zwischen der Zentraleinheit und einer der Ein- und Ausgabeeinheiten und
- Figur 3: die Aktivierung lokaler Netzschutzfunktionseinrichtungen durch die Zentraleinheit der Energieverteilanlage gemäß Figur 1.

In den Figuren werden der Übersicht halber für identische oder vergleichbare Komponenten stets dieselben Bezugszeichen verwendet.

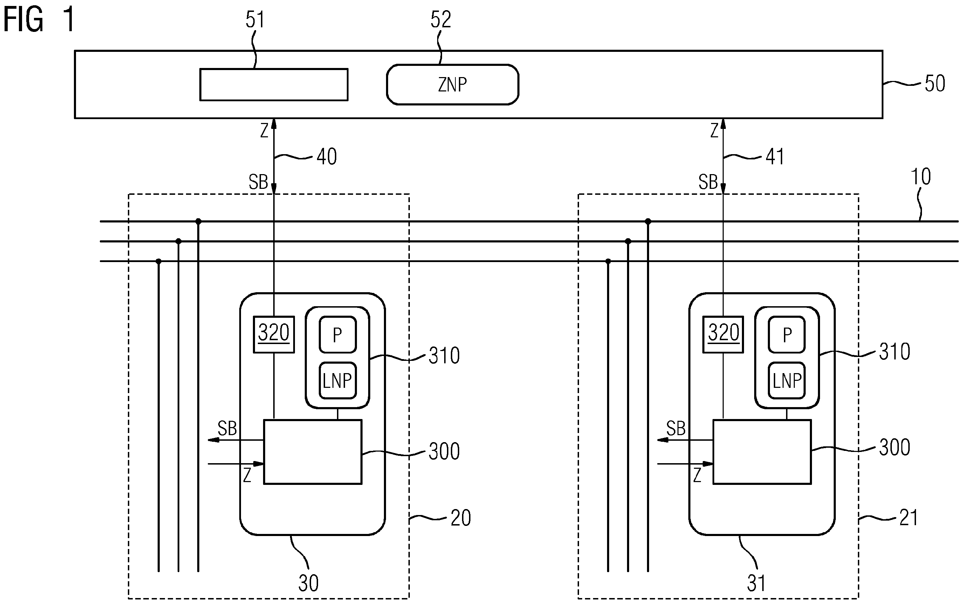

Die Figur 1 zeigt einen Abschnitt einer Energieverteilanlage 10, von der in der Figur 1 zwei Anlagenfelder 20 und 21 dargestellt sind. Die beiden Anlagenfelder 20 und 21 sind jeweils mit einer Ein- und Ausgabeeinheit ausgestattet; die Ein- und Ausgabeeinheiten sind in der Figur 1 mit den Bezugszeichen 30 und 31 markiert.

Die beiden Ein- und Ausgabeeinheiten 30 und 31 stehen über Datenleitungen 40 und 41 mit einer Zentraleinheit 50 in einer Datenverbindung. Anstelle der in der Figur 1 gezeigten Datenleitungen 40 und 41 können zur Gewährleistung der Datenverbindung zwischen den Ein- und Ausgabeeinheiten 30 und 31 und der Zentraleinheit 50 auch Funkverbindungen vorgesehen sein.

Die Zentraleinheit 50 ist mit einer Recheneinrichtung 51 und einem Speicher 52 ausgestattet. In dem Speicher 52 ist ein zentrales Netzschutzfunktionsprogramm ZNP abgespeichert, das bei Ausführung durch die Recheneinrichtung 51 eine zentrale Netzschutzfunktion für die Energieverteilanlage 10 gewährleistet.

Die beiden Ein- und Ausgabeeinheiten 30 und 31 weisen jeweils eine Steuereinrichtung 300, einen Speicher 310 sowie eine Datenverbindungsüberwachungseinrichtung 320 auf.

In dem Speicher 310 ist ein lokales Netzschutzfunktionsprogramm LNP abgespeichert, das durch die Steuereinrichtung 300 ausgeführt werden kann. Im Falle der Ausführung des Netzschutzprogramms LNP bildet die Steuereinrichtung 300 eine Netzschutzfunktionseinrichtung, die für das jeweilige Anlagenfeld 20 bzw. 21 eine Netzschutzfunktion gewährleisten kann. Die Netzschutzfunktionsparameter, die das Netzschutzprogramm LNP für das jeweilige Anlagenfeld 20 bzw. 21 heranzieht, sind in der Figur 1 mit dem Bezugszeichen P gekennzeichnet und vorzugsweise in dem Speicher 310 abgespeichert.

Die Figur 1 zeigt den Betrieb der Zentraleinheit 50 und der Ein- und Ausgabeeinheiten 30 und 31 im störungsfreien Zustand.

Im störungsfreien Zustand übermitteln die Ein- und Ausgabeeinheiten 30 und 31 jeweils Zustandsinformationen Z, die den Zustand des jeweiligen Anlagenfelds 20 bzw. 21 beschreiben, an die übergeordnete Zentraleinheit 50. Die Zentraleinheit 50 wertet die Zustandsinformationen Z aus und erzeugt zur Gewährleistung der Netzschutzfunktion ggf. Steuerbefehle SB, die zu den Ein- und Ausgabeeinheiten 30 und 31 übermittelt werden. Die Funktion der Ein- und Ausgabeeinheiten 30 und 31 besteht darin, die jeweiligen Steuerbefehle SB in ihrem jeweiligen Anlagenfeld 20 bzw. 21 umzusetzen.

Die Datenverbindungsüberwachungseinrichtungen 320 der beiden Ein- und Ausgabeeinheiten 30 und 31 überwachen während des Normalbetriebs die Datenverbindung über die jeweilige Datenleitung 40 bzw. 41 mit der Zentraleinheit 50. Solange die Datenverbindung mit der Zentraleinheit 50 besteht und störungsfrei ist, werden die Zustandsinformationen Z - wie erläutert - von den Ein- und Ausgabeeinheiten 30 bzw. 31 zur Zentraleinheit 50 übersandt, und es werden die empfangenen Steuerbefehle SB umgesetzt.

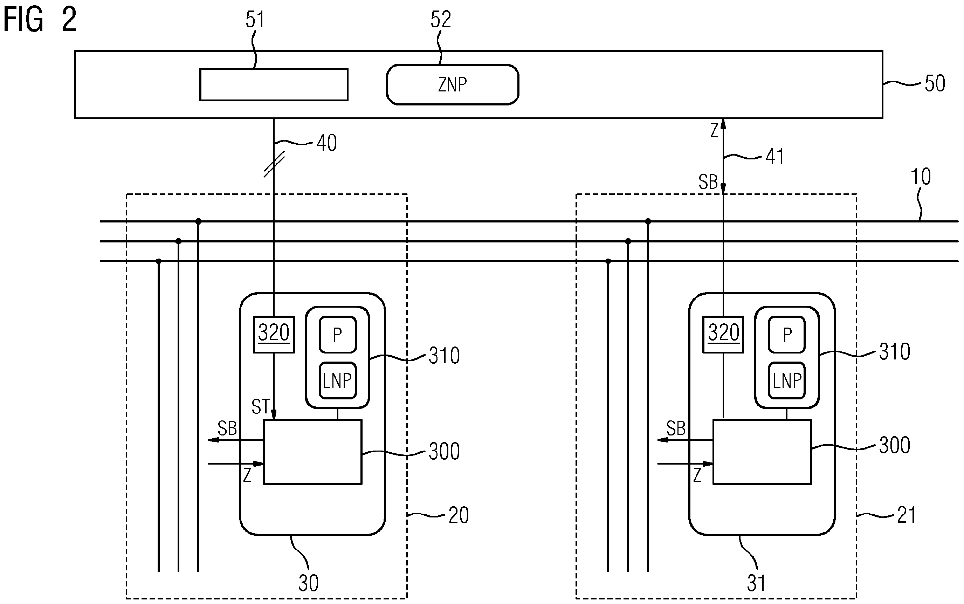

Die Figur 2 zeigt beispielhaft die Arbeitsweise der Anordnung gemäß Figur 1 für den Fall einer Störung der Datenverbindung zwischen der Ein- und Ausgabeeinheit 30 und der Zentraleinheit 50. Sobald die Datenverbindungsüberwachungseinrichtung 320 feststellt, dass die Datenverbindung über die Datenleitung 40 unterbrochen ist, erzeugt sie ein Steuersignal ST, mit dem sie die Steuereinrichtung 300 über den Ausfall der Datenverbindung informiert. Bei Vorliegen des Steuersignals ST startet die Steuereinrichtung 300 das lokale Netzschutzfunktionsprogramm LNP und übernimmt die Netzschutzfunktion für das Anlagenfeld 20 selbst. Bei Ausführung des Netzschutzfunktionsprogramms LNP bildet die Steuereinrichtung 300 gemeinsam mit dem Speicher 310 somit eine Netzschutzfunktionseinrichtung, die zur Ausübung der Netzschutzfunktion für das Anlagenfeld 20 geeignet ist.

Im Rahmen der lokalen Netzschutzfunktion wertet die Steuereinrichtung 300 die Zustandsinformationen Z, die den jeweiligen Anlagenzustand des Anlagenfelds 20 beschreiben, jeweils selbst aus und erzeugt - so erforderlich - selbst Steuerbefehle SB, mit denen aus Gründen der Übersicht nicht gezeigte Komponenten des Anlagenfelds 20 eingeschaltet, ausgeschaltet oder umgeschaltet werden.

Bei dem Anlagenzustand gemäß Figur 2 wird beispielhaft davon ausgegangen, dass die Datenverbindung über die Datenleitung 41 noch intakt ist, so dass die Netzschutzfunktion für das Anlagenfeld 21 weiterhin von der Zentraleinheit 50, also zentral, ausgeübt wird. Lediglich die Netzschutzfunktion für das Anlagenfeld 20 wird lokal ausgeübt, nämlich durch die Ein- und Ausgabeeinheit 30 bzw. die Steuereinrichtung 300, die das lokale Netzschutzfunktionsprogramm LNP ausführt.

Die Arbeitsweise des lokalen Netzschutzprogramms LNP der Ein- und Ausgabeeinheit 30 wird - wie bereits erwähnt - durch die Netzschutzfunktionsparameter P festgelegt, die in dem Speicher 310 abgespeichert sind. Die Netzschutzfunktionsparameter P werden beim Einschalten bzw. bei der Inbetriebnahme der Ein- und Ausgabeeinheit 30 über die Datenleitung 40 von der Zentraleinheit 50 übermittelt. Entsprechendes gilt für die Ein- und Ausgabeeinheit 31, die ihre Netzschutzfunktionsparameter P vorzugsweise ebenfalls beim Einschalten bzw. der Inbetriebnahme der Ein- und Ausgabeeinheit 31 über die Datenleitung 41 von der Zentraleinheit 50 erhält.

Mit anderen Worten erfolgt die Konfiguration der Ein- und Ausgabeeinheiten 30 und 31 vorzugsweise zentral mittels der Zentraleinheit 50 im Rahmen einer Übertragung der jeweiligen Netzschutzfunktionsparameter P über die Datenleitungen 40 bzw. 41.

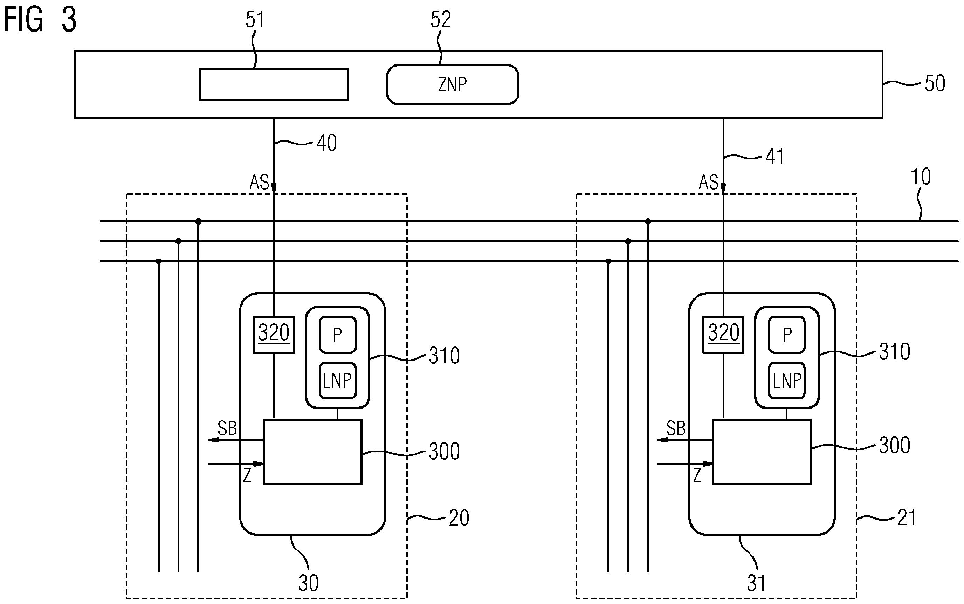

Die Aktivierung der lokalen Netzschutzfunktion bzw. die Aktivierung des Netzschutzfunktionsprogramms LNP durch die Steuereinrichtung 300 kann darüber hinaus durch die Zentraleinheit 50 ausgelöst werden, indem diese ein entsprechendes Aktivierungssignal AS über die jeweilige Datenleitung 40 bzw. 41 zur Ein- und Ausgabeeinheit 30 bzw. 31 übersendet; dies zeigt beispielhaft die Figur 3. Vorzugsweise wird die Zentraleinheit 50 eine Aktivierung der lokalen Netzschutzfunktion durchführen, wenn sie selbst ausgeschaltet wird oder in einen Revisionsbetrieb umgeschaltet wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

### Bezugszeichenliste

- 10: Energieverteilanlage
- 20: Anlagenfeld
- 21: Anlagenfeld
- 30: Ein- und Ausgabeeinheit
- 31: Ein- und Ausgabeeinheit
- 40: Datenleitung
- 41: Datenleitung
- 50: Zentraleinheit
- 51: Recheneinrichtung
- 52: Speicher
- 300: Steuereinrichtung
- 310: Speicher
- 320: Datenverbindungsüberwachungseinrichtung

- AS: Aktivierungssignal
- LNP: Netzschutzfunktionsprogramm
- P: Netzschutzfunktionsparameter
- SB: Steuerbefehle
- ST: Steuersignal
- Z: Zustandsinformationen
- ZNP: Netzschutzfunktionsprogramm

## Patentansprüche

1. Elektrische Energieverteilanlage (10) mit
- zumindest zwei Anlagenfeldern (20, 21),
- einer die Anlagenfelder (20, 21) überwachenden Zentraleinheit (50), die für die Anlagenfelder (20, 21) eine Netzschutzfunktion ausübt, und
- jeweils zumindest einer Ein- und Ausgabeeinheit (30, 31) in jedem Anlagenfeld (20, 21), wobei
- jede der Ein- und Ausgabeeinheiten (30, 31) mit der Zentraleinheit (50) über eine Datenverbindung in Verbindung steht und Zustandsinformationen (Z) über den Zustand des jeweiligen Anlagenfeldes (20, 21) über die Datenverbindung an die Zentraleinheit (50) übermittelt,
- die Zentraleinheit (50) derart ausgestaltet ist, dass sie anhand der übermittelten Zustandsinformationen (Z) ihre Netzschutzfunktion ausübt und im Rahmen der Ausübung der Netzschutzfunktion Steuerbefehle (SB) zu den Ein- und Ausgabeeinheiten (30, 31) der Anlagenfelder (20, 21) übermittelt, und
- die Ein- und Ausgabeeinheiten (30, 31) derart ausgestaltet sind, dass sie empfangene Steuerbefehle (SB) in ihrem jeweiligen Anlagenfeld (20, 21) umsetzen, wobei die Ein- und Ausgabeeinheiten (30, 31) jeweils mit einer eigenen Netzschutzfunktionseinrichtung ausgestattet sind und im Falle einer die Datenverbindung oder die Zentraleinheit (50) betreffenden Betriebsstörung die Netzschutzfunktion in ihrem jeweiligen Anlagenfeld (20, 21) mittels dieser eigenen Netzschutzfunktionseinrichtung jeweils selbst ausüben, wobei
- die Ein- und Ausgabeeinheiten (30, 31) jeweils mit einer Datenverbindungsüberwachungseinrichtung (320) ausgestattet sind, die das Bestehen der Datenverbindung überwacht und bei Ausfall oder Störung der Datenverbindung oder bei Nichterreichbarkeit der Zentraleinheit (50) die Netzschutzfunktionseinrichtung der jeweiligen Ein- und Ausgabeeinheit (30, 31) aktiviert;
**dadurch gekennzeichnet, dass**
- die Zentraleinheit (50) derart ausgestaltet ist, dass sie beim Einschalten bzw. bei der Inbetriebnahme der Ein- und Ausgabeeinheiten abgespeicherte Netzschutzfunktionsparameter (P) an die Ein- und Ausgabeeinheiten (30, 31) übermittelt und
- die Netzschutzfunktionseinrichtungen der Ein- und Ausgabeeinheiten (30, 31) jeweils mit einem Speicher (310) ausgestattet sind, der von der Zentraleinheit (50) erhaltene Netzschutzfunktionsparameter (P) abspeichert, und
- die Netzschutzfunktionseinrichtungen derart ausgestaltet sind, dass sie im Falle einer Störung oder eines Ausfalls der Datenverbindung die Netzschutzfunktion auf der Basis der abgespeicherten Netzschutzfunktionsparameter (P) ausüben.

2. Energieverteilanlage (10) nach Anspruch 1,
**dadurch gekennzeichnet, dass**
die Netzschutzfunktionseinrichtung der Ein- und Ausgabeeinheiten (30, 31) jeweils abgeschaltet bleibt, solange die Datenverbindung besteht und die Zentraleinheit (50) erreichbar und betriebsbereit ist.

3. Energieverteilanlage (10) nach Anspruch 1 oder 2,
**dadurch gekennzeichnet, dass**
die Ein- und Ausgabeeinheiten (30, 31) derart ausgestaltet sind, dass die Netzschutzfunktionseinrichtungen der Ein- und Ausgabeeinheiten (30, 31) auch bei Bestehen der Datenverbindung aktivierbar sind, sei es von der Zentraleinheit (50) oder einer anderen Einheit aus über ein über die Datenverbindung übersendetes Aktivierungssignal (AS) oder manuell.

4. Energieverteilanlage (10) nach Anspruch 3,
**dadurch gekennzeichnet, dass**
die Zentraleinheit (50) derart ausgestaltet ist, dass sie die Aktivierung der Netzschutzfunktionseinrichtungen der Ein- und Ausgabeeinheiten (30, 31) über die Datenverbindung auslöst, wenn sie in einen Revisionsbetrieb geschaltet wird.

5. Ein- und Ausgabeeinheit (30, 31) für ein Anlagenfeld (20, 21) einer Energieverteilanlage (10) nach einem der voranstehenden Ansprüche, wobei
- die Ein- und Ausgabeeinheit (30, 31) mit einer Schnittstelle zum Herstellen einer Datenverbindung mit einer Zentraleinrichtung ausgestattet ist,
- die Ein- und Ausgabeeinheit (30, 31) geeignet ist, Zustandsinformationen (Z) über den Zustand des Anlagenfeldes (20, 21) über die Datenverbindung an die Zentraleinheit (50) zu übermitteln und empfangene Steuerbefehle (SB) der Zentraleinheit (50) umzusetzen, und
- die Ein- und Ausgabeeinheit (30, 31) mit einer eigenen Netzschutzfunktionseinrichtung ausgestattet ist sowie außerdem derart ausgestaltet ist, dass sie im Falle einer die Datenverbindung oder die Zentraleinheit (50) betreffenden Betriebsstörung die Netzschutzfunktion in ihrem jeweiligen Anlagenfeld (20, 21) mittels ihrer Netzschutzfunktionseinrichtung selbst ausübt,
wobei
- die Ein- und Ausgabeeinheiten (30, 31) jeweils mit einer Datenverbindungsüberwachungseinrichtung (320) ausgestattet sind, die das Bestehen der Datenverbindung überwacht und bei Ausfall oder Störung der Datenverbindung oder bei Nichterreichbarkeit der Zentraleinheit (50) die Netzschutzfunktionseinrichtung der jeweiligen Ein- und Ausgabeeinheit (30, 31) aktiviert; **dadurch gekennzeichnet, dass**
- die Netzschutzfunktionseinrichtung der Ein- und Ausgabeeinheit (30, 31) mit einem Speicher ausgestattet ist, der von der Zentraleinheit beim Einschalten bzw. bei der Inbetriebnahme der Ein- und Ausgabeeinheit übermittelte Netzschutzfunktionsparameter abspeichert, und
- die Netzschutzfunktionseinrichtungen derart ausgestaltet sind, dass sie im Falle einer Störung oder eines Ausfalls der Datenverbindung die Netzschutzfunktion auf der Basis der abgespeicherten Netzschutzfunktionsparameter (P) ausüben.

6. Zentraleinheit (50) für ein Anlagenfeld (20, 21) einer Energieverteilanlage (10) nach einem der voranstehenden Ansprüche 1 bis 5,
**dadurch gekennzeichnet, dass**
die Zentraleinheit (50) derart ausgestaltet ist, dass sie beim Einschalten bzw. bei der Inbetriebnahme der Ein- und Ausgabeeinheiten abgespeicherte Netzschutzfunktionsparameter (P) an Netzschutzfunktionseinrichtungen untergeordneter Ein- und Ausgabeeinheiten (30, 31) übermittelt.

7. Verfahren zum Betreiben einer elektrischen Energieverteilanlage (10) mit zumindest zwei Anlagenfeldern (20, 21), einer die Anlagenfelder (20, 21) überwachenden Zentraleinheit (50), die im Normalbetrieb für die Anlagenfelder (20, 21) eine Netzschutzfunktion ausübt, und jeweils zumindest einer Ein- und Ausgabeeinheit (30, 31) in jedem Anlagenfeld (20, 21), wobei
- jede der Ein- und Ausgabeeinheiten (30, 31) mit der Zentraleinheit (50) über eine Datenverbindung in Verbindung steht und Zustandsinformationen (Z) über den Zustand des jeweiligen Anlagenfeldes (20, 21) über die Datenverbindung an die Zentraleinheit (50) übermittelt,
- die Zentraleinheit (50) anhand der übermittelten Zustandsinformationen (Z) ihre Netzschutzfunktion ausübt und im Rahmen der Ausübung der Netzschutzfunktion Steuerbefehle (SB) zu den Anlagenfeldern (20, 21) übermittelt, und
- die Ein- und Ausgabeeinheiten (30, 31) empfangene Steuerbefehle (SB) in ihrem jeweiligen Anlagenfeld (20, 21) umsetzen, und wobei die Ein- und Ausgabeeinheiten (30, 31) jeweils im Falle einer die Datenverbindung oder die Zentraleinheit (50) betreffenden Betriebsstörung die Netzschutzfunktion in ihrem jeweiligen Anlagenfeld (20, 21) selbst ausüben, wobei
- die Ein- und Ausgabeeinheiten (30, 31) das Bestehen der Datenverbindung überwachen und bei Ausfall oder Störung der Datenverbindung oder bei Nichterreichbarkeit der Zentraleinheit (50) die Netzschutzfunktionseinrichtung aktivieren, **dadurch gekennzeichnet,**
**dass**
- die Zentraleinheit (50) beim Einschalten bzw. bei der Inbetriebnahme der Ein- und Ausgabeeinheiten abgespeicherte Netzschutzfunktionsparameter (P) an die Ein- und Ausgabeeinheiten (30, 31) übermittelt und
- die Netzschutzfunktionseinrichtungen der Ein- und Ausgabeeinheiten (30, 31) von der Zentraleinheit (50) erhaltene Netzschutzfunktionsparameter (P) abspeichern und im Falle einer Störung oder eines Ausfalls der Datenverbindung die Netzschutzfunktion auf der Basis der abgespeicherten Netzschutzfunktionsparameter (P) ausüben.

## Claims

1. Electrical energy distribution installation (10) having
- at least two installation areas (20, 21),
- a central unit (50) that monitors the installation areas (20, 21) and performs a network protection function for the installation areas (20, 21), and
- in each case at least one input and output unit (30, 31) in each installation area (20, 21), wherein
- each of the input and output units (30, 31) is connected to the central unit (50) via a data connection and transmits state information (Z) relating to the state of the respective installation area (20, 21) to the central unit (50) via the data connection,
- the central unit (50) is configured in such a way that it performs its network protection function using the transmitted state information (Z) and transmits control commands (SB) to the input and output units (30, 31) of the installation areas (20, 21) in the course of performing the network protection function, and
- the input and output units (30, 31) are configured in such a way that they implement received control commands (SB) in their respective installation area (20, 21), wherein the input and output units (30, 31) are each equipped with a dedicated network protection function device and, in the event of an operating fault affecting the data connection or the central unit (50), perform the network protection function in their respective installation area (20, 21) themselves in each case by means of this dedicated network protection function device, wherein
- the input and output units (30, 31) are each equipped with a data connection monitoring device (320) that monitors the existence of the data connection and, in the case of a failure or fault in the data connection or if the central unit (50) cannot be reached, activates the network protection function device of the respective input and output unit (30, 31); **characterized in that**
- the central unit (50) is configured in such a way that it transmits stored network protection function parameters (P) to the input and output units (30, 31) when the input and output units are switched on or started up, and
- the network protection function devices of the input and output units (30, 31) are each equipped with a memory (310) that stores network protection function parameters (P) obtained from the central unit (50), and
- the network protection function devices are configured in such a way that they perform the network protection function on the basis of the stored network protection function parameters (P) in the event of a fault or failure in the data connection.

2. Energy distribution installation (10) according to Claim 1,
**characterized in that**
the network protection function device of the input and output units (30, 31) in each case remains switched off as long as the data connection exists and the central unit (50) can be reached and is ready for operation.

3. Energy distribution installation (10) according to Claim 1 or 2,
**characterized in that**
the input and output units (30, 31) are configured in such a way that the network protection function devices of the input and output units (30, 31) can also be activated when the data connection exists, whether this be by the central unit (50) or another unit via an activation signal (AS) transmitted via the data connection, or manually.

4. Energy distribution installation (10) according to Claim 3,
**characterized in that**
the central unit (50) is configured in such a way that it triggers the activation of the network protection function devices of the input and output units (30, 31) via the data connection when it is switched into an inspection mode.

5. Input and output unit (30, 31) for an installation area (20, 21) of an energy distribution installation (10) according to one of the preceding claims, wherein
- the input and output unit (30, 31) is equipped with an interface for creating a data connection to a central device,
- the input and output unit (30, 31) is suitable for transmitting state information (Z) relating to the state of the installation area (20, 21) to the central unit (50) via the data connection and implementing received control commands (SB) of the central unit (50), and
- the input and output unit (30, 31) is equipped with a dedicated network protection function device and is furthermore configured in such a way that, in the event of an operating fault affecting the data connection or the central unit (50), it performs the network protection function in its respective installation area (20, 21) itself by means of its network protection function device,
wherein
- the input and output units (30, 31) are each equipped with a data connection monitoring device (320) that monitors the existence of the data connection and, in the case of a failure or fault in the data connection or if the central unit (50) cannot be reached, activates the network protection function device of the respective input and output unit (30, 31); **characterized in that**
- the network protection function device of the input and output unit (30, 31) is equipped with a memory that stores network protection function parameters transmitted by the central unit when the input and output unit is switched on or started up, and
- the network protection function devices are configured in such a way that they perform the network protection function on the basis of the stored network protection function parameters (P) in the event of a fault or failure in the data connection.

6. Central unit (50) for an installation area (20, 21) of an energy distribution installation (10) according to one of the preceding Claims 1 to 5,
**characterized in that**
the central unit (50) is configured in such a way that it transmits stored network protection function parameters (P) to network protection function devices of subordinate input and output units (30, 31) when the input and output units are switched on or started up.

7. Method for operating an electrical energy distribution installation (10) having at least two installation areas (20, 21), a central unit (50) that monitors the installation areas (20, 21) and performs a network protection function for the installation areas (20, 21) during normal operation, and in each case at least one input and output unit (30, 31) in each installation area (20, 21),
wherein
- each of the input and output units (30, 31) is connected to the central unit (50) via a data connection and transmits state information (Z) relating to the state of the respective installation area (20, 21) to the central unit (50) via the data connection,
- the central unit (50) performs its network protection function using the transmitted state information (Z) and transmits control commands (SB) to the installation areas (20, 21) in the course of performing the network protection function, and
- the input and output units (30, 31) implement received control commands (SB) in their respective installation area (20, 21), and wherein the input and output units (30, 31), in the event of an operating fault affecting the data connection or the central unit (50), each perform the network protection function in their respective installation area (20, 21) themselves,
wherein
- the input and output units (30, 31) monitor the existence of the data connection and, in the case of a failure or fault in the data connection or if the central unit (50) cannot be reached, activate the network protection function device, **characterized in that**
- the central unit (50) transmits stored network protection function parameters (P) to the input and output units (30, 31) when the input and output units are switched on or started up, and
- the network protection function devices of the input and output units (30, 31) store network protection function parameters (P) obtained from the central unit (50) and perform the network protection function on the basis of the stored network protection function parameters (P) in the event of a fault or failure in the data connection.

## Revendications

1. Installation (10) de distribution d'énergie électrique comprenant
- au moins deux panneaux (20, 21) d'installation,
- une unité (50) centrale, qui contrôle les panneaux (20, 21) de l'installation et qui exerce une fonction de protection de réseau pour les panneaux (20, 21) de l'installation, et
- respectivement au moins une unité (30) d'entrée et une unité (31) de sortie dans chaque panneau (20, 21) d'installation, dans laquelle
- chacune des unités (30, 31) d'entrée et de sortie est en liaison avec l'unité (50) centrale par une liaison de données et transmet des informations (Z) d'état sur l'état du panneau (20, 21) respectif de l'installation à l'unité (50) centrale par la liaison de données,
- l'unité (50) centrale est conformée de manière à exercer sa fonction de protection de réseau au moyen des informations (Z) d'état transmises et transmet dans le cadre de l'exercice de la fonction de protection de réseau des instructions (SB) de commande aux unités (30, 31) d'entrée et de sortie des panneaux (20, 21) de l'installation, et
- les unités (30, 31) d'entrée et de sortie sont conformées de manière à mettre en œuvre les instructions (SB) de commande reçues dans leur panneau (20, 21) respectif de l'installation, dans laquelle les unités (30, 31) d'entrée et de sortie sont équipées chacune d'un dispositif propre de fonction de protection de réseau et, dans le cas d'une panne de fonctionnement concernant la liaison de données ou l'unité (50) centrale, la fonction de protection de réseau est exercée de soi-même respectivement dans son panneau (20,21) respectif de l'installation au moyen de ce dispositif propre de fonction de protection de réseau,
- dans laquelle, les unités (30, 31) d'entrée et de sortie sont équipées chacune d'un dispositif (320) de contrôle de la liaison de données, qui contrôle l'existence de la liaison de données et qui, si la liaison de données est défaillante ou en panne, ou si l'unité (50) centrale ne peut pas être atteinte, active le dispositif de fonction de protection de réseau de l'unité (30, 31) respective d'entrée et de sortie ; **caractérisé en ce que** ;
- l'unité (50) centrale est conformée de manière à transmettre aux unités (30, 31) d'entrée et de sortie, à la mise en circuit ou à la mise en service des unités d'entrée et de sortie, des paramètres (P) de fonction de protection de réseau mis en mémoire et
- les dispositifs de fonction de protection de réseau des unités (30, 31) d'entrée et de sortie sont équipés chacun d'une mémoire (310), qui met en mémoire des paramètres (P) de fonction de protection de réseau obtenus de l'unité (50) centrale, et
- les dispositifs de fonction de protection de réseau sont conformés de manière à exercer, dans le cas d'une panne ou d'une perturbation de la liaison de données, la fonction de protection de réseau sur la base des paramètres (P) de fonction de protection de réseau, qui ont été mis en mémoire.

2. Installation (10) de distribution d'énergie suivant la revendication 1,
**caractérisée en ce que**
Le dispositif de fonction de protection de réseau des unités (30, 31) d'entrée et de sortie reste hors circuit respectivement tant que la liaison de données existe et tant que l'unité (50) centrale peut être atteinte et est prête à fonctionner.

3. Installation (10) de distribution d'énergie suivant la revendication 1 ou 2,
**caractérisée en ce que**
les unités (30, 31) d'entrée et de sortie sont conformées de manière à pouvoir activer les dispositifs de fonction de protection de réseau des unités (30, 31) d'entrée et de sortie, même lorsque la liaison de données existe, que ce soit par l'unité (50) centrale ou par une autre unité par l'intermédiaire d'un signal (AS) d'activation envoyé par la liaison de données ou manuellement.

4. Installation (10) de distribution d'énergie suivant la revendication 3,
**caractérisée en ce que**
l'unité (50) centrale est conformée de manière à déclencher par la liaison de données, l'activation des dispositifs de fonction de protection de réseau des unités (30, 31) d'entrée et de sortie, si l'on passe dans un fonctionnement de révision.

5. Unité (30, 31) d'entrée et de sortie d'un panneau (20, 21) d'une installation (10) de distribution d'énergie suivant l'une quelconque des revendications précédentes, dans laquelle
- l'unité (30, 31) d'entrée et de sortie est équipée d'une interface de production d'une liaison de données avec un dispositif central,
- l'unité (30, 31) d'entrée et de sortie est propre à transmettre des informations (Z) d'état sur l'état du panneau (20, 21) de l'installation par la liaison de données à l'unité (50) centrale et à mettre en œuvre des instructions (SB) de commandes reçues de l'unité (50) centrale, et
- l'unité (30, 31) d'entrée et de sortie est équipée d'un dispositif propre de fonction de protection de réseau ainsi qu'est conformée en outre de manière à exercer soi-même, au moyen de son dispositif de fonction de protection de réseau, dans le cas d'une perturbation du fonctionnement concernant la liaison de données ou l'unité (50) centrale, la fonction de protection de réseau dans son panneau (20, 21) respectif de l'installation,
dans laquelle
- les unités(30, 31) d'entrée et de sortie sont équipées chacune d'un dispositif (320) de contrôle de la liaison de données, qui contrôle l'existence de la liaison de données et qui, si la liaison de données est défaillante ou en panne, ou si l'unité (50) centrale ne peut pas être atteinte, active le dispositif de fonction de protection de réseau de l'unité (30, 31) respective d'entrée et de sortie ;
**caractérisé en ce que**
le dispositif de fonction de protection du réseau de l'unité (30, 31) d'entrée et de sortie est équipé d'une mémoire, qui met en mémoire des paramètres de fonction de protection de réseau transmis par l'unité centrale à la mise en circuit ou à la mise en service de l'unité d'entrée et de sortie, et
- les dispositifs de fonction de protection de réseau sont conformés de manière à exercer, dans le cas d'une panne ou d'une perturbation de la liaison de données, la fonction de protection de réseau sur la base des paramètres (P) de fonction de protection de réseau, qui ont été mis en mémoire.

6. Unité (50) centrale pour un panneau (20, 21) d'une installation (10) de distribution d'énergie suivant l'une quelconque des revendications 1 à 5 précédentes,
**caractérisée en ce que**
l'unité (50) centrale est conformée de manière à transmettre à des unités (30, 31) d'entrée et de sortie, subordonnées à des dispositifs de fonction de protection de réseau, des paramètres (P) de fonction de protection de réseau mémorisés à la mise en circuit ou à la mise en service des unités d'entrée et de sortie.

7. Procédé pour faire fonctionner une installation (10) de distribution d'énergie électrique, comprenant au moins deux panneaux (20,21) d'installation, une unité (50) centrale, qui contrôle les panneaux (20, 21) de l'installation et qui exerce en fonctionnement normal pour les panneaux (20, 21) de l'installation une fonction de protection de réseau, et respectivement au moins une unité (30, 31) et de sortie dans chaque panneau (20, 21) de l'installation,
dans laquelle,
- chacune des unités (30, 31) d'entrée et de sortie est en liaison avec l'unité (50) centrale par une liaison de données et transmet des informations (Z) d'état sur l'état du panneau (20, 21) respectif de l'installation à l'unité (50) centrale par la liaison de données,
- l'unité (50) centrale exerce sa fonction de protection de réseau à l'aide des informations (Z) d'état transmises et transmet dans le cadre de l'exercice de la fonction de protection de réseau des instructions (SB) de commande aux panneaux (20, 21) de l'installation, et
- les unités (30, 31) d'entrée et de sortie mettent en œuvre dans leurs panneaux (20, 21) respectifs de l'installation des instructions (SB) de commandes reçue et dans lequel les unités (30, 31) d'entrées et de sorties exercent elles-mêmes dans leur panneau (20, 21) respectif de l'installation la fonction de protection du réseau dans le cas d'une perturbation du fonctionnement concernant la liaison de données ou l'unité (50) centrale,
dans lequel
- les unités (30, 31) d'entrée et de sortie contrôlent l'existence de la liaison de données et, si la liaison de données est en panne ou est perturbée ou si l'unité (50) centrale ne peut pas être atteinte, activent le dispositif de fonction de protection de réseau, **caractérisé en ce que**
- l'unité (50) centrale transmet aux unités (30, 31) d'entrée et de sortie des paramètres (P) de fonction de protection de réseau mis en mémoire à la mise en circuit ou à la mise en service des unités d'entrée et de sortie, et
- les dispositifs de fonction de protection de réseau des unités (30, 31) d'entrée et de sortie mettent en mémoire des paramètres (P) de fonctionnement de protection de réseau obtenus de l'unité (50) centrale et, dans le cadre d'une panne ou d'une défaillance de la liaison de données, exercent la fonction de protection d'un réseau sur la base des paramètres (P) de fonction de protection de réseau, qui ont été mis en mémoire.
